# NEUE EUROPÄISCHE PATENTSCHRIFT

(11) **EP 1 498 629 B2**
(45) Veröffentlichungstag und Bekanntmachung des Hinweises auf die Entscheidung über den Einspruch: **16.10.2013**
(45) Hinweis auf die Patenterteilung: 19.11.2008
(21) Anmeldenummer: 04015283.7
(22) Anmeldetag: 30.06.2004
(51) Int. Cl.: F16D 23/14

(54) **Ausrücksystem**
Disengagement system
Système de débrayage

(30) Priorität: 16.07.2003 DE 10332261
(43) Veröffentlichungstag der Anmeldung: 19.01.2005
(73) Patentinhaber: Schaeffler Technologies AG & Co. KG, 91074 Herzogenaurach (DE)
(72) Erfinder: Neto, Salvador, Mangano, CEP 18046-070 Sorocaba (BR)

(56) Entgegenhaltungen:
- DE-A1- 4 303 489
- DE-C2- 4 211 477
- FR-A- 2 692 949
- FR-A- 2 742 200
- FR-A1- 2 692 949

## Beschreibung

Die Erfindung betrifft ein Ausrücksystem für eine Kupplung, mit einem in axialer Richtung bewegbaren Betätigungselement, das durch ein Kopplungsteil mit einer Tellerfedereinrichtung koppelbar ist und eine eine erste und eine zweite Nutflanke umfassende, umlaufende Nut aufweist deren erste Nutflanke einen axialen Anschlag für ein Fixierelement bildet, mit dem das Kopplungsteil in einer axialen Richtung relativ zu dem Betätigungsteil gehalten wird.

Herkömmliche Ausrücksysteme für Kupplungen sind oft kompliziert aufgebaut und demzufolge teuer in der Herstellung und schwierig zu montieren.

Die FR 2 742 200 A1 beschreibt ein Ausrücksystem mit einer Federeinrichtung, die aus mehreren Federringen mit einer axialen Profilierung aufweisen, wobei die Profile der Federringe zueinander entgegengesetzt angeordnet sind und beim Verpressen der Ringe durch Verformen der Profile eine Federwirkung entsteht. Alternativ wird vorgeschlagen Federringe mit Tellerfedercharakteristik zu verwenden.

Aufgabe der Erfindung ist es daher, ein Ausrücksystem für eine Kupplung bereitzustellen, das einfach aufgebaut, kostengünstig herstellbar und leicht zu montieren ist.

Die Aufgabe ist bei einem Ausrücksystem für eine Kupplung, mit einem in axialer Richtung bewegbaren Betätigungselement, das durch ein Kopplungsteil mit einer Tellerfedereinrichtung koppelbar ist und eine eine erste und eine zweite Nutflanke umfassende, umlaufende Nut aufweist, deren erste Nutflanke einen axialen Anschlag für ein Fixierelement bildet, mit dem das Kopplungsteil in einer axialen Richtung relativ zu dem Betätigungselement gehalten wird und mit einer Federeinrichtung dadurch gelöst, dass die zweite Nutflanke einen axialen Anschlag für eine Federeinrichtung bildet, wobei die Federeinrichtung mehrere Federfinger aufweist, die sich im entspannten Zustand radial außerhalb der ersten Nutflanke und in axialer Richtung über die Nut hinaus erstrecken.

Die Federeinrichtung ist so zwischen der zweiten Nutflanke und dem Kopplungsteil eingespannt, dass das Kopplungsteil in Anlage an der Tellerfedereinrichtung gehalten wird. Die Fedefinger liegen mit ihren freien Enden vorzugsweise an dem Kopplungselement an, können aber auch an dem Betätigungselement anliegen. Die Anordnung der Federfinger radial außerhalb der ersten Nutflanke vereinfacht das Aufschieben der Federeinrichtung über die erste Nutflanke bei der Montage

Ein bevorzugtes Ausführungsbeispiel des Ausrücksystems ist dadurch gekennzeichnet, dass die Federeinrichtung einen im Wesentlichen kreisringscheibenförmigen Grundkörper aufweist, von dem die Federfinger ausgehen. Vorzugsweise sind die Federfinger einstückig mit dem Grundkörper ausgebildet.

Ein weiteres bevorzugtes Ausführungsbeispiel des Ausrücksystems ist dadurch gekennzeichnet, dass die freien Enden der Federfinger in axialer Richtung von dem Grundkörper beabstandet sind. Durch den Abstand zwischen den freien Enden der Federfinger und dem Grundkörper wird der Federweg der Federeinrichtung definiert.

Ein weiteres bevorzugtes Ausführungsbeispiel des Ausrücksystems ist dadurch gekennzeichnet, dass die Federfinger in radialer Richtung nach innen gekrümmt ausgebildet sind. Dadurch wird der Bauraum in radialer Richtung begrenzt.

Ein weiteres bevorzugtes Ausführungsbeispiel des Ausrücksystems ist dadurch gekennzeichnet, dass die Krümmung der Federfinger in radialer Richtung an die Krümmung des Grundkörpers angepasst ist. Die Federfinger haben in der Draufsicht betrachtet, im Wesentlichen die Gestalt von Kreisbögen, die koaxial zu dem Grundkörper angeordnet sind.

Ein weiteres bevorzugtes Ausführungsbeispiel des Ausrücksystems ist dadurch gekennzeichnet, dass die Federfinger in axialer Richtung gekrümmt ausgebildet sind. Durch die axiale Krümmung wird den Federfingem die Federwirkung verliehen.

Ein weiteres bevorzugtes Ausführungsbeispiel des Ausrücksystems ist dadurch gekennzeichnet, dass der Innendurchmesser des Grundkörpers größer als der Außendurchmesser der ersten Nutflanke ist. Dadurch wird ein problemloses Aufschieben der Federeinrichtung über die erste Nutflanke bei der Montage gewährleistet. Der Grundkörper kommt im eingebauten Zustand der Federeinrichtung vorzugsweise an einem Bund zur Anlage, der an dem Betätigungselement ausgebildet ist.

Ein weiteres bevorzugtes Ausführungsbeispiel des Ausrücksystems ist dadurch gekennzeichnet, dass an dem Innendurchmesser des Grundkörpers mindestens drei Zentriervorsprünge ausgebildet sind, die sich radial nach innen erstrecken. Die Zentriervorsprünge dienen dazu, die Federeinrichtung relativ zu dem Betätigungselement zu zentrieren.

Ein weiteres bevorzugtes Ausführungsbeispiel des Ausrücksystems ist dadurch gekennzeichnet , dass an den Federfingern jeweils eine Zentriernocke ausgebildet ist, die sich radial nach innen erstreckt. Die Zentriemocken dienen dazu, die Federeinrichtung relativ zu dem Betätigungselement zu zentrieren.

Ein weiteres bevorzugtes Ausführungsbeispiel des Ausrücksystems ist dadurch gekennzeichnet, dass an dem Grundkörper oder an den Federfingem ein Zentrierring ausgebidet ist. Der Zentrierring dient dazu, die Federeinrichtung relativ zu dem Betätigungselement zu zentrieren.

Die oben angegebene Aufgabe ist bei einer Kupplung, insbesondere für ein Kraftfahrzeug, die zur Drehmomentübertragung zwischen einem Motor und einem Getriebe dient und eine Druckplatte umfasst, die drehfest, jedoch axial begrenzt verlagerbar in einem Gehäuse angeordnet ist, wobei zwischen Gehäuse und Druckplatte eine Tellerfeder wirksam ist, durch welche die Druckplatte in Richtung einer zwischen dieser und einer Gegendruckplatte einklemmbaren Kupplungsscheibe mit Reibbelägen beaufschlagbar ist, durch ein vorab beschriebenes Ausrücksystem gelöst.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Form erfindungswesentlich sein. Es zeigen:
- Figur 1: eine teilweise geschnittene Darstellung eines erfindungsgemäßen Ausrücksystems;
- Figur 2: das Ausrücksystem aus Figur 1, wobei nur die Federeinrichtung aufgeschoben ist;
- Figur 3: das Ausrücksystem aus Figur 2, wobei die Federeinrichtung umgekehrt aufgesetzt ist;
- Figur 4: die Betätigungseinrichtung des Ausrücksystems aus Figur 1 in Alleinstellung im Längsschnitt;
- Figur 5: einen vergrößerten Ausschnitt aus Figur 1 gemäß einer Ausführungsform mit Zentrierring;
- Figur 6: eine Federeinrichtung mit Zentriernocken in der Draufsicht;
- Figur 7: die Federeinrichtung aus Figur 6 in der Seitenansicht;
- Figur 8: eine Federeinrichtung mit Zentriervorsprüngen in der Draufsicht;
- Figur 9: die Federeinrichtung aus Figur 8 in der Seitenansicht;
- Figur 10: eine Federeinrichtung mit Zentriernocken in perspektivischer Darstellung;
- Figur 11: die Federeinrichtung aus Figur 10 in umgedrehter Anordnung;
- Figur 12: eine Federeinrichtung mit Zentriervorsprüngen in perspektivischer Darstellung;
- Figur 13: die Federeinrichtung aus Figur 12 in umgedrehter Anordnung;
- Figur 14: einen Ausschnitt aus Figur 1 mit einer Druckfedereinrichtung;
- Figur 15: einen Ausschnitt aus Figur 1 mit einer im Wesentlichen kegelförmigen Druckfedereinrichtung;
- Figur 16: einen Ausschnitt aus Figur 1 mit einer Federlaschenscheibe und
- Figur 17: die Federlaschenscheibe aus Figur 16 in der Draufsicht.

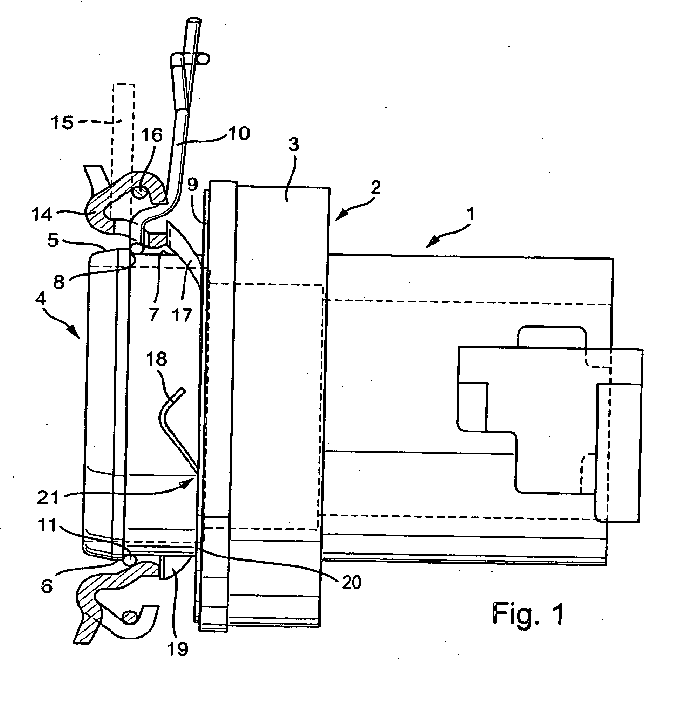

In Figur 1 ist ein Kupplungsausrücksystem 1 mit einem Betätigungselement 2 schematisch dargestellt. Der Aufbau und die Funktion des Kupplungsausrücksystems 1 werden als bekannt vorausgesetzt und daher hier nicht weiter erläutert.

Das Betätigungselement 2 weist einen Bund 3 auf, von dem ein zentraler Zapfen 4 ausgeht. Der Zapfen 4 weist ein sich verjüngendes freies Ende 5 auf. Im Anschluss an das Ende 5 umfasst der Zapfen 4 einen axialen Abschnitt 6 mit konstantem Außendurchmesser. Darauf folgt eine Nut 7, die eine eine erste Nutflanke 8 und eine zweite Nutflanke 9 aufweist. Die erste Nutflanke 8 wird von dem axialen Abschnitt 6 des Zapfens 4 gebildet. Die zweite Nutflanke 9 wird von einer Stirnseite des Bundes 3 des Betätigungselements 2 gebildet.

Ein Fixierelement 10 liegt mit einem Ringköper 11, der zu Montagezwecken geschlitzt ausgebildet sein kann, an der ersten Nutflanke 8 an. Das Fixierelement 10 bildet einen axialen Anschlag für ein Kopplungsteil 14, an dem eine Zunge einer Tellerfedereinrichtung 15 anliegt. Durch einen Sicherungsring 16 wird eine spielfreie Kopplung zwischen der Tellerfedereinrichtung 15 und dem Kopplungsteil 14 in axialer Richtung gewährleistet.

An dem Kopplungsteil 14 liegen Federfinger 17, 18, 19 an, die von einem im Wesentlichen kreisringscheibenförmigen Grundkörper 20 mit einem rechteckförmigen Querschnitt ausgehen. Der Grundkörper 20 und die Federfinger 17 bis 19 bilden eine Federeinrichtung 21. Der Grundkörper 20 liegt an der zweiten Nutflanke 9 an, die von dem Bund 3 gebildet wird. Die Federeinrichtung 21 ist also zwischen der zweiten Nutflanke 9 und dem Kopplungsteil 14 eingespannt. Dadurch wird das Kopplungsteil 14 über das Fixierelement 10 in Anlage an der ersten Nutflanke 8 der Nut 7 gehalten.

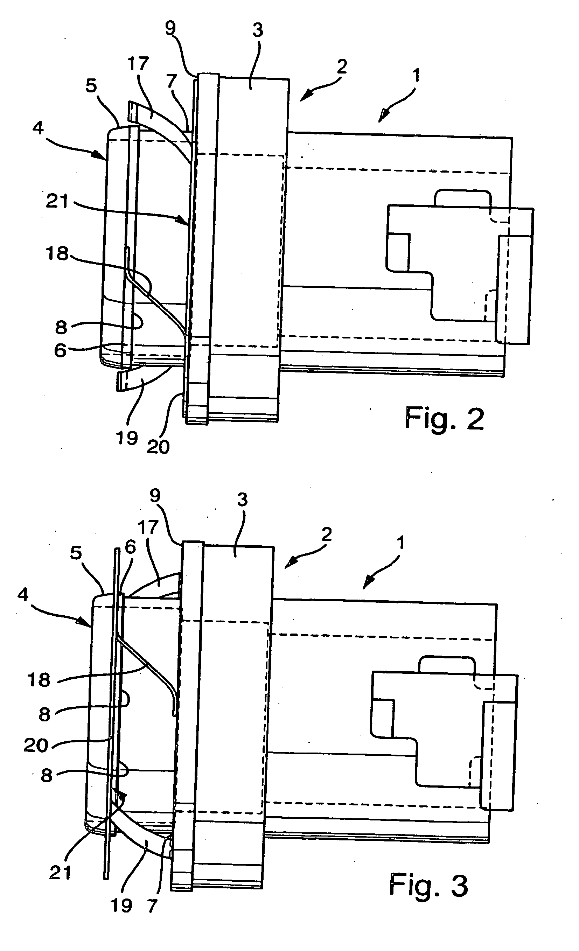

In Figur 2 ist das Kupplungsausrücksystem 1 aus Figur 1 dargestellt, wobei nur die Federeinrichtung 21 auf den Zapfen 4 aufgeschoben ist. Das Fixierelement 10, das Kopplungselement 14, der Sicherungsring 16 und die Tellerfedereinrichtung 15 fehlen in dieser Darstellung. Wie man in Figur 2 sieht, liegt der Grundkörper 20 der Federeinrichtung 21 an der zweiten Nutflanke 9 der Nut 7 an. Die Federfinger 17 bis 19 erstrecken sich in axialer Richtung über die Nut 7 hinaus bis zu dem sich verjüngenden freien Ende 5 des Zapfens 4. In Figur 2 befinden sich die Federfinger 17 bis 19 im entspannten Zustand. Wenn das Kopplungsteil 14 eingebaut wird, werden die Federfinger 17 bis 19 in axialer Richtung zusammengedrückt.

In Figur 3 sieht man, dass die Federeinrichtung 21 auch umgekehrt eingebaut werden kann. Die freien Enden der Federfinger 17 bis 19 befinden sich in Anlage an der zweiten Nutflanke 9 der Nut 7. Der Grundkörper 20 der Federeinrichtung 21 ist im entspannten Zustand im Bereich des freien Endes 5 des Zapfens 4 angeordnet.

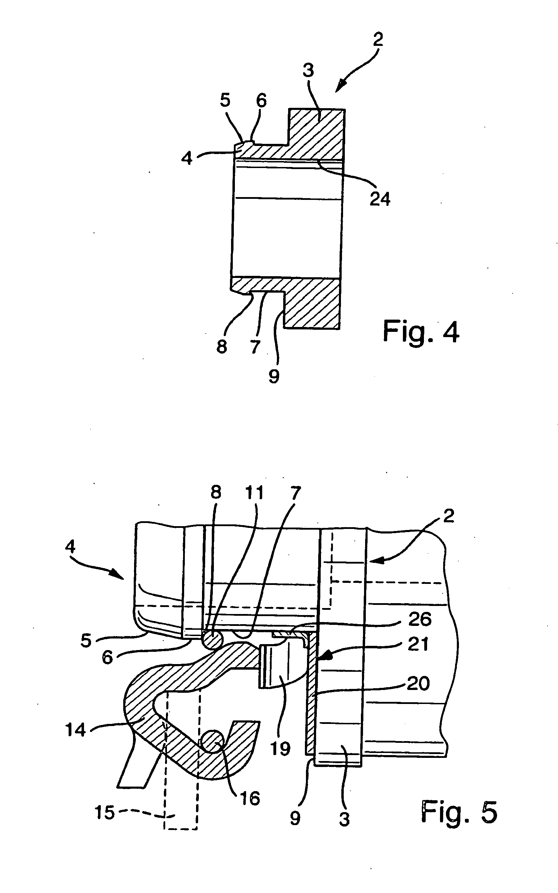

In Figur 4 ist das Betätigungselement 2 in Alleinstellung im Längsschnitt dargestellt. Wie man in Figur 4 sieht, weist das Betätigungselement 2 eine durchgehende Bohrung 24 auf. Das Betätigungselement 2 hat somit im Wesentlichen die Gestalt einer Hülse, an der der Bund 3 ausgebildet ist.

In Figur 5 ist ein Ausschnitt aus Figur 1 gemäß einer weiteren Ausführungsform dargestellt. Dabei ist an dem Grundkörper 20 zusätzlich zu den Federzungen, von denen in dem Ausschnitt in Figur 5 nur die Federzunge 19 sichtbar ist, noch ein Zentrierring 26 an dem Grundkörper 20 angebracht. Mit dem Zentrierring 26 wird die Federeinrichtung 21 relativ zu dem Grund der Nut 7 zentriert.

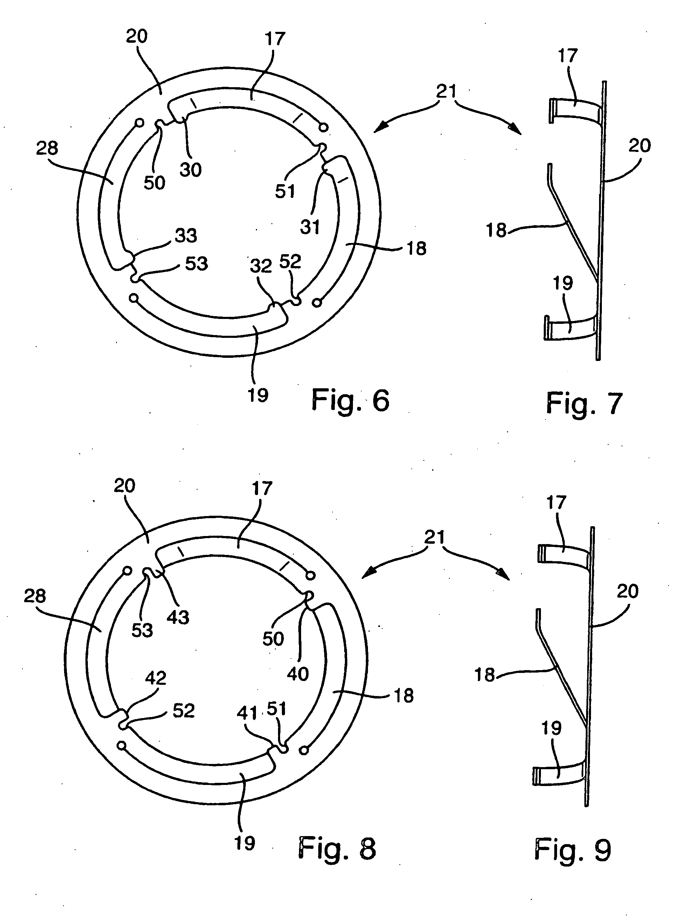

In den Figuren 6 und 7 ist eine Federeinrichtung 21 gemäß einer weiteren Ausführungsform in der Draufsicht und in der Seitenansicht dargestellt. Bei dieser Ausführungsform sind an dem Grundkörper 20 nicht nur drei Federfinger 17 bis 19, sondern zusätzlich ein vierter Federfinger 28 angebracht. An den freien Enden der Federfinger 17 bis 19, 28 sind Zentriernocken 30 bis 33 vorgesehen, die sich in radialer Richtung nach innen erstrecken. Die Zentriernocken 30 bis 33 dienen dazu, die Federeinrichtung 21 relativ zu dem Nutgrund der Nut (7 in Figur 1) zu zentrieren. Zusätzlich sieht man in Figur 6, dass der Grundkörper 20 der Federeinrichtung 21 an seinem inneren Umfang Positionieraussparungen 50 bis 53 aufweist, die in Umfangsrichtung gleichmäßig voneinander beabstandet sind. Die Positionieraussparungen 50 bis 53 dienen dazu, die Federeinrichtung 21 bei der Montage und/oder im eingebauten Zustand in Umfangsrichtung zu positionieren.

In den Figuren 8 und 9 ist eine Federeinrichtung 21 gemäß einer weiteren Ausführungsform in der Draufsicht und in der Seitenansicht dargestellt. Bei dieser Ausführungsform sind an dem Grundkörper 20 Zentriervorsprünge 40 bis 43 ausgebildet, die sich in radialer Richtung nach innen erstrecken. Die Zentriervorsprünge 40 bis 43 dienen dazu, die Federeinrichtung 21 relativ zu dem Grund der Nut (7 in Figur 1) zu zentrieren. Neben den Zentriervorsprüngen 40 bis 43 sind Positionieraussparungen 50 bis 53 vorgesehen, die dazu dienen die Federeinrichtung 21 bei der Montage und/oder im eingebauten Zustand in Umfangsrichtung zu positionieren. Im Anschluss an die Positionieraussparungen 50 bis 53 gehen von dem Grundkörper 20 die Federfinger 17, 18, 19, 28 aus.

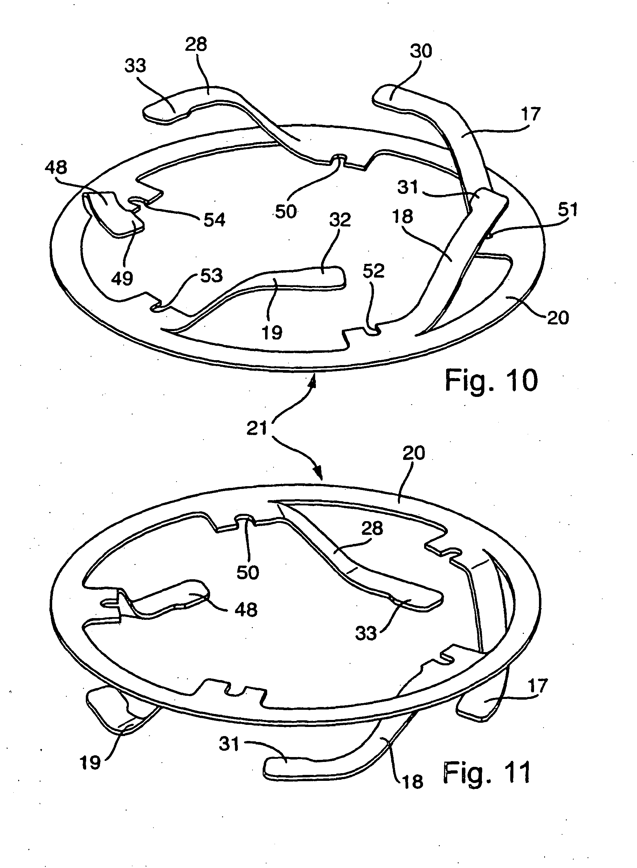

In den Figuren 10 und 11 ist eine Federeinrichtung 21 perspektivisch von oben und von unten dargestellt. Die in den Figuren 10 und 11 dargestellte Ausführungsform entspricht der in den Figuren 6 und 7 dargestellten Ausführungsform mit Zentriemocken, wobei die in den Figuren 10 und 11 dargestellte Federeinrichtung 21 nicht nur vier, sondem zusätzlich einen fünften Federfinger 48 mit einem Zentriemocken 49 aufweist. Ansonsten entspricht die in den Figuren 10 und 11 dargestellte Ausführungsform der in den Figuren 6 und 7 dargestellten Ausführungsform.

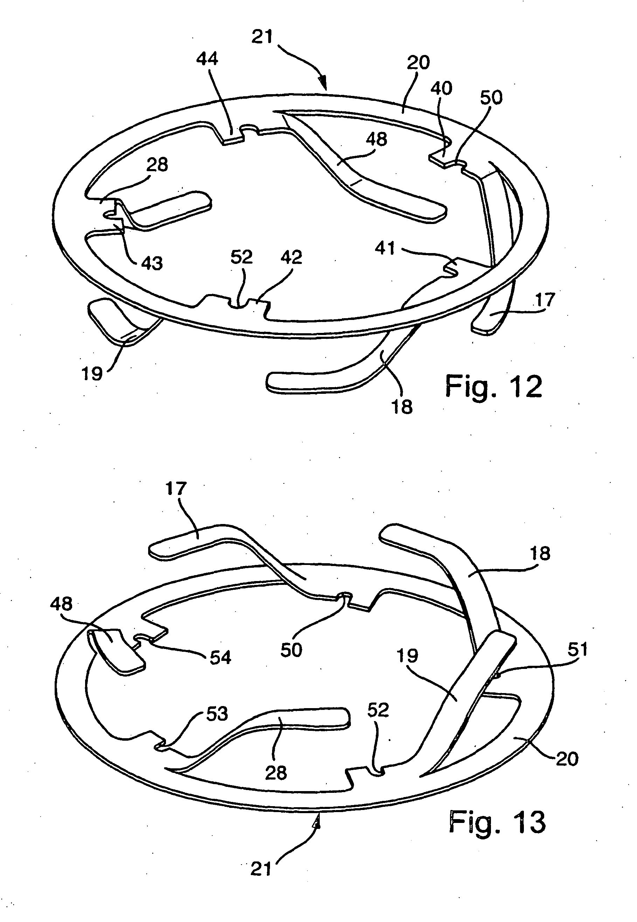

In den Figuren 12 und 13 ist eine weitere Ausführungsform der Federeinrichtung 21 von oben und von unten in perspektivischer Darstellung gezeigt. Die in den Figuren 12 und 13 dargestellte Ausführungsform entspricht der in den Figuren 8 und 9 dargestellten Ausführungsform mit Zentriervorsprüngen, wobei die in den Figuren 12 und 13 dargestellte Ausführungsform nicht nur vier, sondern einen fünften Federfinger 48 und einen fünften Zentriervorsprung 44 bzw. 54 aufweist. Ansonsten weisen die beiden Ausführungsformen den gleichen Aufbau und die gleichen Funktionen auf.

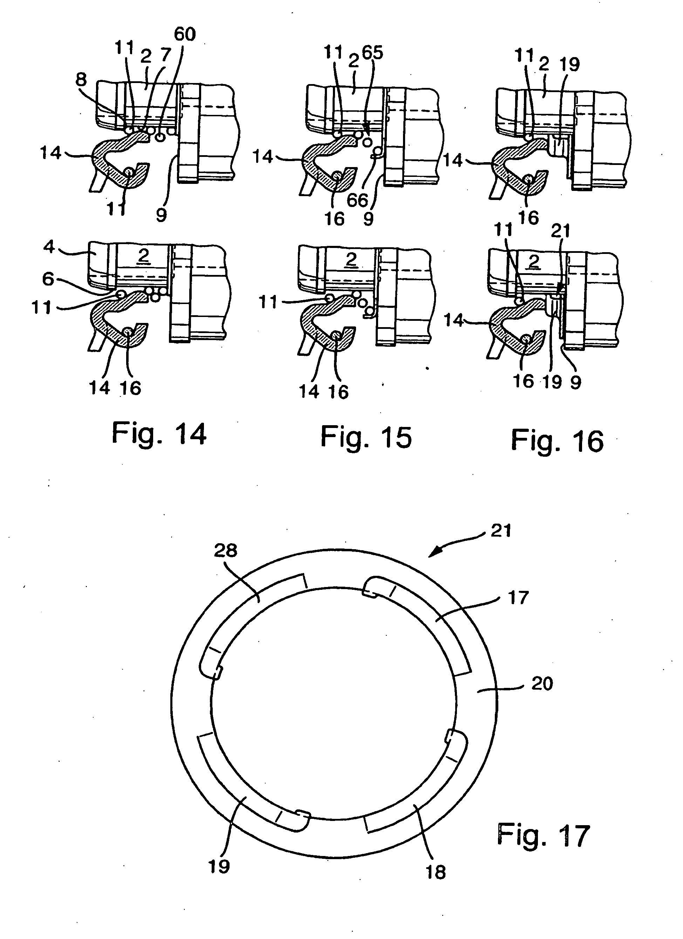

In Figur 14 ist ein Ausschnitt aus Figur 1 dargestellt, wobei die Federeinrichtung 21 durch eine Druckfeder 60 ersetzt ist. Die Druckfeder 60 ist zwischen der zweiten Nutflanke 9 und dem Kopplungsteil 14 eingespannt. In Figur 14 oben befindet sich der Ringkörper 11 des Fixierelements, wie auch in den Figuren 15 und 16 oben, in Anlage an der ersten Nutflanke 8 der Nut 7. In Figur 14 unten ist der Ringkörper 11, bezogen auf seinen Durchmesser, aufgeweitet dargestellt. In Figur 14 unten weist der Ringkörper 11, wie auch in den Figuren 15 und 16 unten, einen Innendurchmesser auf, der größer als der Außendurchmesser des axialen Abschnitts 6 des Zapfens 4 ist. In diesem Zustand kann der Ringkörper 11 über den axialen Abschnitt 6 aufgeschoben werden.

In Figur 15 ist die Federeinrichtung 21, im Vergleich zu Figur 1, durch eine im Wesentlichen kegelförmige Druckfeder 65 ersetzt. Die kegelförmige Druckfeder 65 ist zwischen der zweiten Nutflanke 9 und dem Kopplungsteil 14 eingespannt. Im Bereich der zweiten Nutflanke 9 wird die Druckfeder 65 in radialer Richtung durch einen Haltering 66 fixiert.

In Figur 16 ist ein laschenscheibenförmiges Federelement 21 zwischen der zweiten Nutflanke 9 und dem Kopplungselement 14 eingespannt. In Figur 17 sieht man, dass von dem Grundkörper 20 vier Federfinger 17, 18, 19 und 28 ausgehen, die im Wesentlichen kreisbogenförmig ausgebildet sind.

## Patentansprüche

1. Ausrücksystem für eine Kupplung, mit einem in axialer Richtung bewegbaren Betätigungselement (2), das durch ein Kopplungsteil (14) mit einer Tellerfedereinrichtung (15) koppelbar ist und eine eine erste (8) und eine zweite (9) Nutflanke umfassende, umlaufende Nut (7) aufweist, deren erste Nutflanke (8) einen axialen Anschlag für ein Fixierelement (10) bildet, mit dem das Kopplungsteil (14) in einer axialen Richtung relativ zu dem Betätigungselement (2) gehalten wird, und mit einer Federeinrichtung (21), wobei die zweite Nutflanke (9) einen axialen Anschlag für eine Federeinrichtung (21) bildet, wobei die Federeinrichtung (21) mehrere Federfinger (17 bis 19) aufweist, die sich im entspannten Zustand radial außerhalb der ersten Nutflanke (8) und in axialer Richtung über die Nut (7) hinaus erstrecken.

2. Ausrücksystem nach Anspruch 1, **dadurch gekennzeichnet, dass** die Federeinrichtung (21) einen im Wesentlichen kreisringscheibenförmigen Grundkörper (20) aufweist, von dem die Federfinger (17 bis 19) ausgehen.

3. Ausrücksystem nach Anspruch 2, **dadurch gekennzeichnet, dass** die freien Enden der Federfinger (17 bis 19) in axialer Richtung von dem Grundkörper (20) beabstandet sind.

4. Ausrücksystem nach Anspruch 3, **dadurch gekennzeichnet, dass** die Federfinger (17 bis 19) in radialer Richtung nach innen gekrümmt ausgebildet sind.

5. Ausrücksystem nach Anspruch 4, **dadurch gekennzeichnet, dass** die Krümmung der Federfinger (17 bis 19) in radialer Richtung an die Krümmung des Grundkörpers (20) angepasst ist.

6. Ausrücksystem nach einem der Ansprüche 3 bis 5, **dadurch gekennzeichnet, dass** die Federfinger (17 bis 19) in axialer Richtung gekrümmt ausgebildet sind.

7. Ausrücksystem nach einem der Ansprüche 2 bis 6, **dadurch gekennzeichnet, dass** der Innendurchmesser des Grundkörpers (20) größer als der Außendurchmesser der ersten Nutflanke (8) ist.

8. Ausrücksystem nach einem der vorhergehenden Ansprüche, **dadurch gekennzeichnet, dass** an dem Innendurchmesser des Grundkörpers (20) mindestens drei Zentriervorsprünge (40 bis 43) ausgebildet sind, die sich radial nach innen erstrecken.

9. Ausrücksystem nach einem der Ansprüche 1 bis 7, **dadurch gekennzeichnet, dass** an den Federfingern (17 bis 19) jeweils eine Zentriernocke (30 bis 32) ausgebildet ist, die sich radial nach innen erstreckt.

10. Ausrücksystem nach einem der Ansprüche 1 bis 7, **dadurch gekennzeichnet, dass** an dem Grundkörper (20) oder an den Federfingern (17 bis 19) ein Zentrierring (26) ausgebildet ist.

11. Kupplung, insbesondere für ein Kraftfahrzeug, die zur Drehmomentübertragung zwischen einem Motor und einem Getriebe dient und eine Druckplatte umfasst, die drehfest, jedoch axial begrenzt verlagerbar in einem Gehäuse angeordnet ist, wobei zwischen Gehäuse und Druckplatte eine Tellerfeder wirksam ist, durch welche die Druckplatte in Richtung einer zwischen dieser und einer Gegendruckplatte einklemmbaren Kupplungsscheibe mit Reibbelägen beaufschlagbar ist, mit einem Ausrücksystem nach einem der vorhergehenden Ansprüche.

## Claims

1. Disengagement system for a clutch, having an actuating element (2) which is movable in an axial direction and which can be coupled by means of a coupling part (14) to a plate spring device (15) and which has an encircling groove (7) which comprises a first (8) and a second (9) groove flank, the first groove flank (8) of which groove (7) forms an axial stop for a fixing element (10) by means of which the coupling part (14) is held in an axial direction relative to the actuating element (2), and having a spring device (21), with the second groove flank (9) forming an axial stop for a spring device (21), with the spring device (21) having a plurality of spring fingers (17 to 19) which, in the relaxed state, extend radially outside the first groove flank (8) and in an axial direction beyond the groove (7).

2. Disengagement system according to Claim 1, **characterized in that** the spring device (21) has a substantially circular-disc-shaped base body (20) from which the spring fingers (17 to 19) extend.

3. Disengagement system according to Claim 2, **characterized in that** the free ends of the spring fingers (17 to 19) are spaced apart from the base body (20) in the axial direction.

4. Disengagement system according to Claim 3, **characterized in that** the spring fingers (17 to 19) are formed so as to curve inward in the radial direction.

5. Disengagement system according to Claim 4, **characterized in that** the curvature of the spring fingers (17 to 19) in the radial direction is matched to the curvature of the base body (20).

6. Disengagement system according to one of Claims 3 to 5, **characterized in that** the spring fingers (17 to 19) are formed so as to be curved in the axial direction.

7. Disengagement system according to one of Claims 2 to 6, **characterized in that** the inner diameter of the base body (20) is greater than the outer diameter of the first groove flank (8).

8. Disengagement system according to one of the preceding claims, **characterized in that** at least three centring projections (40 to 43) are formed on the inner diameter of the base body (20), which centring projections (40 to 43) extend radially inwards.

9. Disengagement system according to one of Claims 1 to 7, **characterized in that** in each case one centring cam (30 to 32) is formed on the spring fingers (17 to 19), which centring cam (30 to 32) extends radially inwards.

10. Disengagement system according to one of Claims 1 to 7, **characterized in that** a centring ring (26) is formed on the base body (20) or on the spring fingers (17 to 19).

11. Clutch, in particular for a motor vehicle, which clutch serves for transmitting torque between an engine and a transmission and comprises a pressure plate which is arranged so as to be rotationally fixed yet axially movable to a limited extent in a housing, with a plate spring acting between the housing and the pressure plate, by means of which plate spring the pressure plate can be acted on in the direction of a clutch disc which can be clamped between said pressure plate and a mating pressure plate and which has friction linings, having a disengagement system according to one of the preceding claims.

## Revendications

1. Système de débrayage pour un embrayage, comprenant un élément d'actionnement (2) déplaçable dans la direction axiale, qui peut être accouplé par une pièce d'accouplement (14) à un dispositif de ressort Belleville (15), et qui présente une rainure (7) périphérique comprenant un premier (8) et un deuxième (9) flanc de rainure, dont le premier flanc de rainure (8) forme une butée axiale pour un élément de fixation (10), avec lequel la pièce d'accouplement (14) est maintenue dans une direction axiale par rapport à l'élément d'actionnement (2), et comprenant un dispositif de ressort (21), le deuxième flanc de rainure (9) formant une butée axiale pour un dispositif de ressort (21), le dispositif de ressort (21) présentant plusieurs doigts de ressort (17 à 19) qui s'étendent dans l'état détendu radialement en dehors du premier flanc de rainure (8) et dans la direction axiale au-delà de la rainure (7).

2. Système de débrayage selon la revendication 1, **caractérisé en ce que** le dispositif de ressort (21) présente un corps de base (20) essentiellement en forme de disque annulaire circulaire, depuis lequel partent les doigts de ressort (17 à 19).

3. Système de débrayage selon la revendication 2, **caractérisé en ce que** les extrémités libres des doigts de ressort (17 à 19) sont espacées du corps de base (20) dans la direction axiale.

4. Système de débrayage selon la revendication 3, **caractérisé en ce que** les doigts de ressort (17 à 19) sont réalisés de manière courbée vers l'intérieur dans la direction radiale.

5. Système de débrayage selon la revendication 4, **caractérisé en ce que** la courbure des doigts de ressort (17 à 19) dans la direction radiale est adaptée à la courbure du corps de base (20).

6. Système de débrayage selon l'une quelconque des revendications 3 à 5, **caractérisé en ce que** les doigts de ressort (17 à 19) sont réalisés de manière courbée dans la direction axiale.

7. Système de débrayage selon l'une quelconque des revendications 2 à 6, **caractérisé en ce que** le diamètre intérieur du corps de base (20) est supérieur au diamètre extérieur du premier flanc de rainure (8).

8. Système de débrayage selon l'une quelconque des revendications précédentes, **caractérisé en ce qu'**au moins trois saillies de centrage (40 à 43) sont réalisées au niveau du diamètre intérieur du corps de base (20), lesquelles s'étendent radialement vers l'intérieur.

9. Système de débrayage selon l'une quelconque des revendications 1 à 7, **caractérisé en ce qu'**une came de centrage (30 à 32) est à chaque fois réalisée sur les doigts de ressort (17 à 19) et s'étend radialement vers l'intérieur.

10. Système de débrayage selon l'une quelconque des revendications 1 à 7, **caractérisé en ce qu'**une bague de centrage (26) est réalisée sur le corps de base (20) ou sur les doigts de ressort (17 à 19).

11. Embrayage, en particulier pour un véhicule automobile, qui sert au transfert de couple entre un moteur et une boîte de vitesses, et qui comprend une plaque de pression, qui est disposée de manière solidaire en rotation mais déplaçable axialement dans une mesure limitée dans un boîtier, un ressort Belleville étant actif entre le boîtier et la plaque de pression, et pouvant solliciter la plaque de pression dans la direction d'un disque d'embrayage pouvant être serré entre celle-ci et une plaque de contre-pression, avec des garnitures de frein, et comprenant un système de débrayage selon l'une quelconque des revendications précédentes.
